# EUROPEAN PATENT APPLICATION

(11) **EP 4 726 641 A1**
(43) Date of publication of application: **15.04.2026**
(21) Application number: 25202527.5
(22) Date of filing: 16.09.2025
(51) Int. Cl.: G06Q 50/18, G06Q 30/0201, G06Q 30/018

(54) **TRADEMARK NAME OPTIMIZATION**

(30) Priority: 10.10.2024 US 202418911789
(71) Applicant: Camelot UK Bidco Limited, London EC3A 8BE (GB)
(72) Inventor: WAERNIERS, Jan, 9880 Aalter (BE); SMET, An, 9190 Stekene (BE); KEYNGNAERT, Peter, 9850 Landegem (BE)
(74) Representative: Marks & Clerk LLP

(57) **Abstract**

System, methods, apparatuses, and computer program products are disclosed for recommending candidate trademarks. A set of candidate trademarks are determined by transforming an input trademark. A first subset of the candidate trademarks are determined based on viability scores associated with the set of candidate trademarks satisfying a viability condition. A second subset of candidate trademarks are determined based on registrability scores associated with the first subset of candidate trademarks satisfying a registrability condition. The second subset of candidate trademarks and the registrability scores associated with the second subset of candidate trademarks are output as recommended trademark candidates.

## Description

### BACKGROUND

Identifying a suitable trademark candidate can be a complex process that needs to account for the distinctiveness of the trademark candidate, conflicts between the trademark candidate and existing trademarks, and industry-specific naming rules. Trademark candidates need to be distinctive to qualify for protection, as generic or common words typically cannot be trademarked. Furthermore, trademark candidates cannot conflict with existing trademarks, as phonetically similar or visually similar trademark candidates can lead to confusion with existing trademarks. Moreover, certain industries, like pharmaceuticals, have specific naming rules to avoid confusion of drugs among stakeholders.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

System, methods, apparatuses, and computer program products are disclosed for recommending candidate trademarks. A set of candidate trademarks are determined by transforming an input trademark. A first subset of the candidate trademarks are determined based on viability scores associated with the set of candidate trademarks satisfying a viability condition. A second subset of candidate trademarks are determined based on registrability scores associated with the first subset of candidate trademarks satisfying a registrability condition. The second subset of candidate trademarks and the registrability scores associated with the second subset of candidate trademarks are output as recommended trademark candidates.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for recommending candidate trademarks generated by transforming an input trademark, in accordance with an embodiment.
FIG. 2 depicts a block diagram of an example system for recursively recommending candidate trademarks generated by transforming an input trademark, in accordance with an embodiment.
FIG. 3 depicts a flowchart of a process for recommending candidate trademarks generated by transforming an input trademark, in accordance with an embodiment.
FIG. 4 depicts a flowchart of a process for recursively generating trademark recommendations, in accordance with an embodiment.
FIG. 5 depicts a flowchart of a process for filtering candidate trademarks based on a viability score, in accordance with an embodiment.
FIG. 6 depicts a flowchart of a process for recommending candidate trademarks based on a dissimilarity with existing trademarks, in accordance with an embodiment.
FIG. 7 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, the term "trademark" refers to a word or phrase that identifies a good or service, and may include industry-specific trademarks, such as, but not limited to, brand names of pharmaceutical drugs.

### II. Example Embodiments

Identifying a suitable trademark candidate can be a complex process that needs to account for the distinctiveness of the trademark candidate, conflicts between the trademark candidate and existing trademarks, and industry-specific naming rules. A typical process for identifying a trademark candidate begins with an applicant identifying a desired trademark. A trademark clearance search is performed to determine whether the desired trademark is sufficiently distinctive and/or whether the desired trademark conflicts with any existing trademark, for example, based on phonetic and/or visual similarities. In certain industries, such as pharmaceuticals, the desired trademark is further analyzed to determine whether a desired drug name will lead to confusion with existing drug names based on similarities between the names when handwritten (e.g., in cursive). If the desired trademark is determined to be too generic and/or too similar to existing trademarks, the applicant needs repeat the process by identifying another desired trademark.

Embodiments disclosed herein are directed to optimizing the process of identifying candidate trademarks. In embodiments, an applicant provides a desired trademark as an input trademark as a starting point. In embodiments, one or more transformations are applied to the input trademark to identify a set of candidate trademarks that are variations of the input trademark. For instance, applying a transformation to the input trademarks can include, but is not limited to, replacing a character of the input trademark with another character, replacing a consonant of the input trademark with another consonant, replacing a vowel of the input trademark with another vowel, swapping a character of the input trademark with an adjacent character of the input trademark, swapping a consonant of the input trademark with an adjacent consonant of the input trademark, swapping a consonant of the input trademark with an adjacent character of the input trademark, swapping a vowel of the input trademark with an adjacent vowel of the input trademark, swapping a vowel of the input trademark with an adjacent character of the input trademark, swapping a character of the input trademark with a non-adjacent character of the input trademark, swapping a consonant of the input trademark with a non-adjacent consonant of the input trademark, swapping a consonant of the input trademark with a non-adjacent character of the input trademark, swapping a vowel of the input trademark with a non-adjacent vowel of the input trademark, swapping a vowel of the input trademark with a non-adjacent character of the input trademark, adding a character to the input trademark, and/or dropping a character from the input trademark. In embodiments, the transformations applied to the input trademark are limited by one or more constraints, such as, but not limited to, excluding a designated portion (e.g., prefix, infix, suffix, etc.) of the input trademark from one or more transformations, applying different transformations to different portions (e.g., prefix, infix, suffix, etc.) of the input trademark, and/or the like.

In embodiments, the set of candidate trademarks are analyzed to determine a subset of viable candidate trademarks based on a trademark viability score. For instance, the set of candidate trademarks are analyzed to determine whether the candidate trademark bears characteristics that are typical of registered names (e.g., registered trademarks, registered entity names, registered drug names, etc.), such as, but not limited to, distinctiveness, memorability, catchiness, pronounceability, rhythmicity, and/or the like. In embodiments, the trademark viability score is determined based on, for example, but not limited to, a Euclidean distance between a vector representative of a candidate trademark and registered names, a cosine distance between a vector representative of a candidate trademark and registered names, a log-likelihood that the candidate trademark belongs to a set of registered names, a classifier configured to classify a candidate trademark based on its similarity to registered names, a similarity model configured to determine a level of similarity between a candidate trademark and registered names, a machine learning model trained using a training dataset comprising registered names, and/or the like. In embodiments, candidate trademarks of the set of candidate trademarks associated with a trademark viability score that satisfies a predetermined relationship (e.g., greater than, greater than or equal to, less than, less than or equal to, etc.) with a predetermined trademark viability score threshold are included in the subset of viable candidate trademarks for further consideration.

In embodiments, the subset of viable candidate trademarks are analyzed to determine a subset of recommended candidate trademarks based on a trademark registrability score. For instance, the subset of viable candidate trademarks are compared to registered trademarks to determine whether the subset of viable candidate trademarks would conflict with registered names. In embodiments, the trademark registrability score is determined based on, for example, but not limited to, a Euclidean distance between a vector representative of a candidate trademark and registered names (e.g., registered trademarks, registered entity names, registered drug names, etc.), a cosine distance between a vector representative of a candidate trademark and registered names, a log-likelihood that the candidate trademark belongs to a set of registered names, a classifier configured to classify a candidate trademark based on its dissimilarity to registered names, a similarity model configured to determine a level of dissimilarity between a candidate trademark and registered names, a machine learning model trained using a training dataset comprising registered names, and/or the like. In embodiments, candidate trademarks of the subset of viable candidate trademarks associated with a trademark registrability score that satisfies a predetermined relationship (e.g., greater than, greater than or equal to, less than, less than or equal to, highest ranking, etc.) with a predetermined trademark registrability score threshold are included in the subset of recommended candidate trademarks.

In embodiments, the registrability score is determined for the subset of viable candidate trademarks based on an algorithm, computer program, and/or formula provided by a regulatory entity (e.g., industry regulator, governmental agency, Food and Drug Administration (FDA), etc.). For instance, the registrability score may be determined based on a Phonetic and Orthographic Computer Analysis (POCA) system and/or program provided by the FDA that is designed to provide a POCA score based on a degree of similarity between names based on both their phonetic (sound) and orthographic (spelling) characteristics.

In embodiments, the subset of recommended candidate trademarks are output as recommended candidate trademarks. For instance, a recommendation of candidate trademarks may include the subset of recommended candidate trademarks along with their respective trademark viability scores and/or trademark registrability scores. In embodiments, the recommendation may further include the input trademark along with a registrability score associated with the input trademark to enable comparison of the registrability of the input trademark and the subset of recommended candidate trademarks.

In embodiments, the optimization process is repeated recursively to apply additional transformations to the candidate trademarks associated with the highest registrability scores. For instance, additional transformations may be applied to the subset of recommended candidate trademarks to obtain a second set of candidate trademarks. In embodiments, the second set of candidate trademarks are analyzed to determine a second subset of viable candidate trademarks that satisfy the viability condition. In embodiments, the second subset of viable candidate trademarks are analyzed to determine a second subset of recommended candidate trademarks that satisfy the registrability condition. In embodiments, the recommendation further includes the second subset of recommended candidate trademarks along with their associated trademark viability scores and/or trademark registrability scores.

These and further embodiments are disclosed herein that enable the functionality described above and additional functionality. Such embodiments are described in further detail as follows.

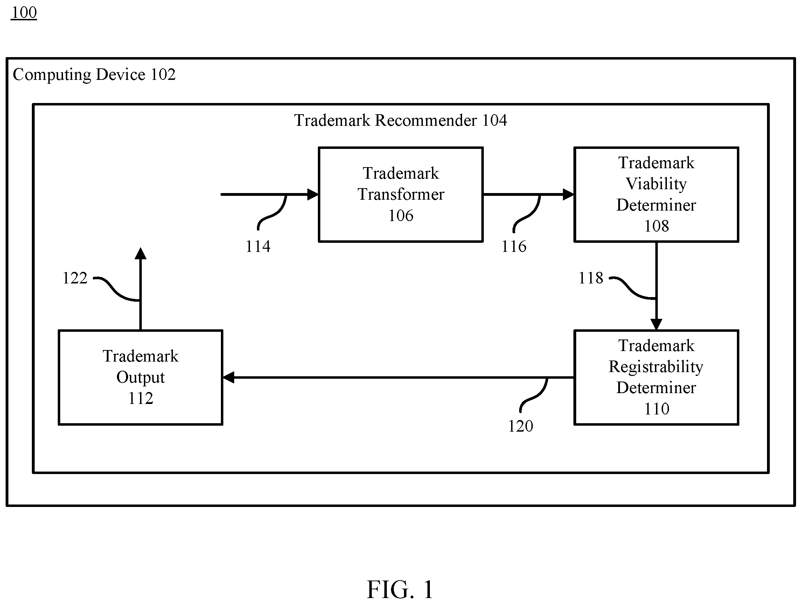

For instance, FIG. 1 depicts a block diagram of an example system 100 for recommending candidate trademarks generated by transforming an input trademark, in accordance with an embodiment. As shown in FIG. 1, system 100 includes a computing device 102 comprising a trademark recommender 104. In embodiments, trademark recommender 104 further includes a trademark transformer 106, a trademark viability determiner 108, a trademark registrability determiner 110, and a trademark output 112. System 100 is described in further detail as follows.

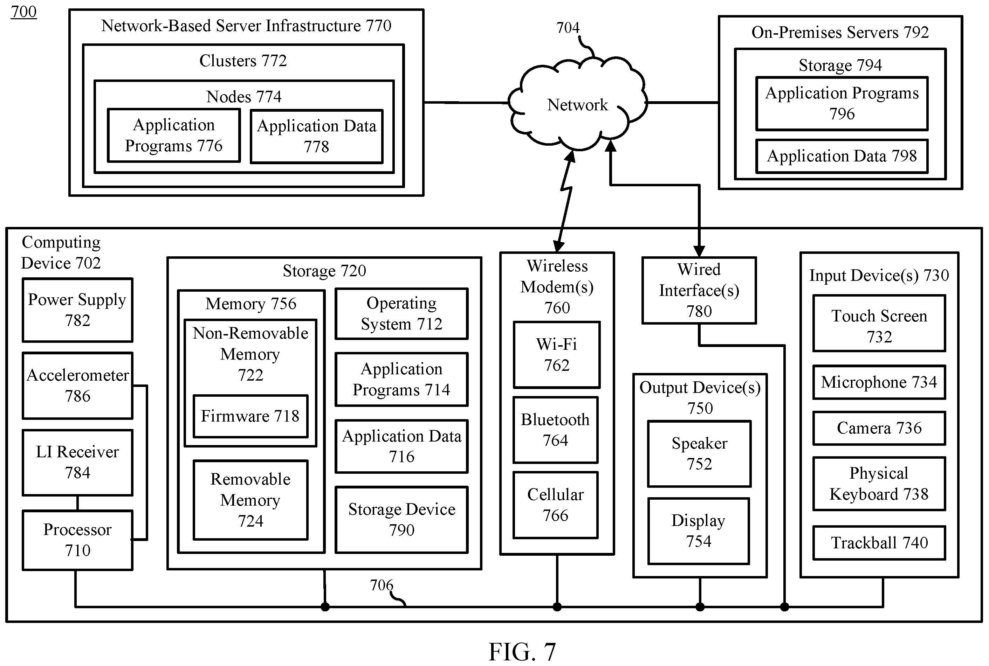

Computing device 102 comprises any type of stationary or mobile processing device, including, but not limited to, a desktop computer, a server, a mobile or handheld device (e.g., a tablet, a personal data assistant (PDA), a smart phone, a laptop, etc.), etc. Various example implementations of computing device 102 are described below in reference to FIG. 7 (e.g., computing device 702, network-based server infrastructure 770, on-premises servers 792, and/or components thereof).

Trademark recommender 104 is configured to output a recommendation 122 of candidate trademarks that are determined based on an input trademark 114. In embodiments, trademark recommender 104 determines a set of candidate trademarks by applying one or more transformations to input trademark 114, analyzes the set of candidate trademarks based on their trademark viability and/or trademark registrability, and generates recommendation 122 based on candidate trademarks that satisfy a trademark viability condition and/or a trademark registrability condition.

Trademark transformer 106 is configured to apply one or more transformations to input trademark 114 to generate a set of candidate trademarks 116. In embodiments, the transformations applied by trademark transformer 106 to the input include, but are not limited to, replace one or more characters of the input trademark with one or more other characters, add one or more characters to the input trademark, and/or remove one or more characters from the input trademark. Additional transformation may include, for example, but are not limited to, replacing a character of input trademark 114 with another character, replacing a consonant of input trademark 114 with another consonant, replacing a vowel of input trademark 114 with another vowel, swapping a character of input trademark 114 with an adjacent character of input trademark 114, swapping a consonant of input trademark 114 with an adjacent consonant of input trademark 114, swapping a consonant of input trademark 114 with an adjacent character of input trademark 114, swapping a vowel of input trademark 114 with an adjacent vowel of input trademark 114, swapping a vowel of input trademark 114 with an adjacent character of input trademark 114, swapping a character of input trademark 114 with a non-adjacent character of input trademark 114, swapping a consonant of input trademark 114 with a non-adjacent consonant of input trademark 114, swapping a consonant of input trademark 114 with a non-adjacent character of input trademark 114, swapping a vowel of input trademark 114 with a non-adjacent vowel of input trademark 114, swapping a vowel of input trademark 114 with a non-adjacent character of input trademark 114, adding a character to input trademark 114, and/or dropping a character from input trademark 114. In embodiments, the transformations applied by trademark transformer 106 are limited by one or more constraints, such as, but not limited to, excluding a designated portion (e.g., prefix, infix, suffix, etc.) of input trademark 114 from one or more transformations, applying different transformations to different portions (e.g., prefix, infix, suffix, etc.) of input trademark 114, and/or the like. In embodiments, trademark transformer 106 provides the set of candidate trademarks 116 to trademark viability determiner 108.

Trademark viability determiner 108 is configured to analyze candidate trademarks of the set of candidate trademarks 116 to determine a subset of viable candidate trademarks 118 based on a trademark viability score. For instance, the set of candidate trademarks 116 are compared to registered trademarks to determine whether the set of candidate trademarks 116 characteristics that are typical of registered names (e.g., registered trademarks, registered entity names, registered drug names, etc.), such as, but not limited to, distinctiveness, memorability, catchiness, pronounceability, rhythmicity, and/or the like. In embodiments, the trademark viability score is determined based on, for example, but not limited to, a Euclidean distance between a vector representative of a candidate trademark and registered names, a cosine distance between a vector representative of a candidate trademark and registered names, a log-likelihood that the candidate trademark belongs to a set of registered names, a classifier configured to classify a candidate trademark based on its similarity to registered names, a similarity model configured to determine a level of similarity between a candidate trademark and registered names, a machine learning model trained using a training dataset comprising registered names, and/or the like. In embodiments, candidate trademarks of the set of candidate trademarks 116 that satisfy a viability condition are included in the subset of viable candidate trademarks 118 for further consideration. For instance, candidate trademarks of the set of candidate trademarks 116 associated with a trademark viability score that satisfies a predetermined relationship (e.g., greater than, greater than or equal to, less than, less than or equal to, etc.) with a predetermined trademark viability score threshold are included in the subset of viable candidate trademarks 118 for further consideration. In embodiments, trademark viability determiner 108 provides the subset of viable candidate trademarks 118 to trademark registrability determiner 110 for further consideration.

Trademark registrability determiner 110 is configured to analyze the subset of viable candidate trademarks 118 to determine a subset of recommended candidate trademarks 120 based on a trademark registrability score. In embodiments, trademark registrability determiner 110 determines the trademark registrability score based on, for example, but not limited to, a Euclidean distance between a vector representative of a candidate trademark and registered names (e.g., registered trademarks, registered entity names, registered drug names, etc.), a cosine distance between a vector representative of a candidate trademark and registered names, a log-likelihood that the candidate trademark belongs to a set of registered names, a classifier configured to classify a candidate trademark based on its dissimilarity to registered names, a similarity model configured to determine a level of dissimilarity between a candidate trademark and registered names, and/or the like.

In embodiments, trademark registrability determiner 110 determines the registrability score for the subset of viable candidate trademarks 118 based on an algorithm, computer program, and/or formula provided by a regulatory entity (e.g., industry regulator, governmental agency, FDA, etc.). For instance, the registrability score may be include a POCA score determined using a POCA system and/or program provided by the FDA that is designed to provide a POCA score based on a degree of similarity between names based on both their phonetic (sound) and orthographic (spelling) characteristics. In embodiments, candidate trademarks of the subset of viable candidate trademarks 118 that satisfy a registrability condition are included in the subset of recommended candidate trademarks 120. In embodiments, candidate trademarks of the subset of viable candidate trademarks 118 associated with a trademark registrability score that satisfies a predetermined relationship (e.g., greater than, greater than or equal to, less than, less than or equal to, highest ranking, etc.) with a predetermined trademark registrability score threshold are included in the subset of recommended candidate trademarks 120. In embodiments, trademark registrability determiner 110 provides the subset of recommended candidate trademarks 120 to trademark output 112.

Trademark output 112 is configured to generate recommendation 122 of candidate trademarks based on the subset of recommended candidate trademarks 120. In embodiments, trademark output 112 includes in recommendation 122 candidate trademarks of on the subset of recommended candidate trademarks 120 along with their associated viability score as determined by trademark viability determiner 108 and/or their associated trademark registrability score as determined by trademark registrability determiner 110.

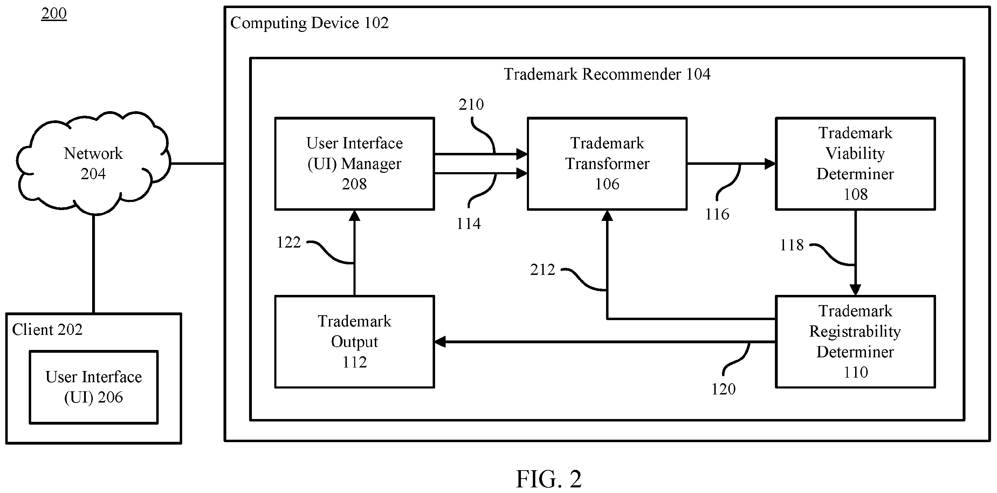

Embodiments described herein may operate in various ways to recursively recommend candidate trademarks generated by transforming an input trademark. For example, FIG. 2 depicts a block diagram of an example system 200 for recursively recommending candidate trademarks generated by transforming an input trademark, in accordance with an embodiment. As shown in FIG. 2, system 200 includes computing device 102, trademark recommender 104, trademark transformer 106, trademark viability determiner 108, trademark registrability determiner 110, and trademark output 112. System 200 further includes a client 202 communicatively coupled to computing device 102 via a network 204. Trademark recommender 104 further includes a UI manager 208, and client 202 further includes a user interface (UI) 206. System 200 is described in further detail as follows.

Client 202 comprises any type of stationary or mobile processing device, including, but not limited to, a desktop computer, a server, a mobile or handheld device (e.g., a tablet, a personal data assistant (PDA), a smart phone, a laptop, etc.), etc. Various example implementations of client 202 are described below in reference to FIG. 7 (e.g., computing device 702, and/or components thereof).

Network 204 comprises one or more wired, wireless, cellular, and/or mobile networks capable of communicatively coupling client 202 to computing device 102. Various example implementations of client 202 are described below in reference to FIG. 7 (e.g., computing device 704, and/or components thereof).

UI 206 is configured to enable a user to input one or more of input trademark 114 to trademark, and/or parameters 210, such as, but not limited to, transformations that may be applied to input trademark 114 and/or portions thereof, transformations that may not be applied to input trademark 114 and/or portions thereof, the number of transformations that may be applied to input trademark 114, a trademark viability score threshold, a trademark registrability score threshold, a recursion depth limit, and/or the like. In embodiments, UI 206 is configured to output one or more of recommendation 122 of recommended candidate trademarks, the candidate trademark from which the recommended candidate trademark is derived, trademark viability scores associated with the recommended candidate trademarks, trademark registrability scores associated with the recommended candidate trademarks, a trademark viability score associated with input trademark 114, a trademark registrability score associated with input trademark 114, and/or the like. In embodiments, UI 206 includes, but is not limited to, a graphical user interface (GUI), an application program interface (API), a voice interface, a natural language (NL) interface, a touch-based interface, a command-line interface (CLI), and/or the like. In embodiments, UI 206 may include various elements, such as, but not limited to, buttons, menus, toggle elements, checkboxes, input fields, icons, radio buttons, dropdown menus, slider elements, tables, and/or the like.

UI manager 208 is configured to manage UI 206, including, but not limited to, generating UI 206, receiving input from UI 206, modifying UI 206 based on input received from UI 206, modifying UI 206 based on recommendation 122, and/or the like. In embodiments, UI manager 208 receives input trademark 114 and/or parameters 210 from UI 206, and provides input trademark 114 and/or parameters 210 to trademark transformer 106. In embodiments, UI manager 208 receives recommendation 122 from trademark output 112, and provides recommendation 122 to UI 206.

As depicted in FIG. 2, trademark registrability determiner 110, in embodiments, provides one or more recommended candidate trademarks 212 to trademark transformer 106 to enable trademark transformer 106 to recursively apply additional transformations to the recommended candidate trademark(s) 212 to obtain a second set of candidate trademarks 116. In embodiments, recommended candidate trademark(s) 212 may be the same as, may be a subset of, and/or may be a superset of, the subset of recommended candidate trademarks 120. In embodiments, trademark transformer 106 provides the second set of candidate trademarks 116 to trademark viability determiner 108. In embodiments, trademark viability determiner 108 analyzes the second set of candidate trademarks 116 to determine a second subset of viable candidate trademarks 118 that satisfy the viability condition. In embodiments, trademark viability determiner 108 provides the second subset of viable candidate trademarks 118 to trademark registrability determiner 110. In embodiments, trademark registrability determiner 110 analyzes the second subset of viable candidate trademarks 118 to determine a second subset of recommended candidate trademarks 120 that satisfy the registrability condition. In embodiments, trademark registrability determiner 110 provides the second subset of recommended candidate trademarks 120 to trademark output 112 for inclusion in recommendation 122 along with their associated trademark viability scores and/or trademark registrability scores.

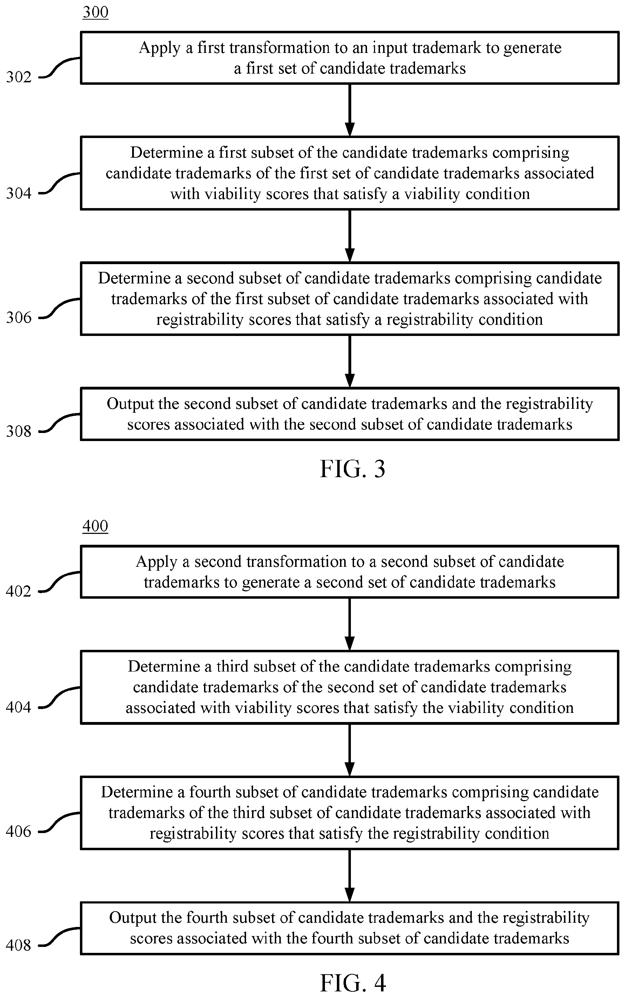

Embodiments described herein may operate in various ways to recommend candidate trademarks generated by transforming an input trademark. FIG. 3 depicts a flowchart 300 of a process for recommending candidate trademarks generated by transforming an input trademark, in accordance with an embodiment. Computing device 102, trademark recommender 104, trademark transformer 106, trademark viability determiner 108, trademark registrability determiner 110, trademark output 112, and/or UI manager 208 may operate in accordance with flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1-2 for illustrative purposes.

Flowchart 300 starts at step 302. In step 302, a first transformation is applied to an input trademark to generate a first set of candidate trademarks. For instance, trademark transformer 106 applies a transformation to input trademark 114 to generate the set of candidate trademarks 116. In embodiments, the transformations applied by trademark transformer 106 to the input include, but are not limited to, replacing a character of input trademark 114 with another character, replacing a consonant of input trademark 114 with another consonant, replacing a vowel of input trademark 114 with another vowel, swapping a character of input trademark 114 with an adjacent character of input trademark 114, swapping a consonant of input trademark 114 with an adjacent consonant of input trademark 114, swapping a consonant of input trademark 114 with an adjacent character of input trademark 114, swapping a vowel of input trademark 114 with an adjacent vowel of input trademark 114, swapping a vowel of input trademark 114 with an adjacent character of input trademark 114, swapping a character of input trademark 114 with a non-adjacent character of input trademark 114, swapping a consonant of input trademark 114 with a non-adjacent consonant of input trademark 114, swapping a consonant of input trademark 114 with a non-adjacent character of input trademark 114, swapping a vowel of input trademark 114 with a non-adjacent vowel of input trademark 114, swapping a vowel of input trademark 114 with a non-adjacent character of input trademark 114, adding a character to input trademark 114, and/or dropping a character from input trademark 114. In embodiments, the transformations applied by trademark transformer 106 are limited by one or more constraints, such as, but not limited to, excluding a designated portion (e.g., prefix, infix, suffix, etc.) of input trademark 114 from one or more transformations, applying different transformations to different portions (e.g., prefix, infix, suffix, etc.) of input trademark 114, and/or the like. In embodiments, trademark transformer 106 provides the set of candidate trademarks 116 to trademark viability determiner 108.

In step 304, a first subset of the candidate trademarks is determined, the first subset of candidate trademarks comprising candidate trademarks of the first set of candidate trademarks associated with viability scores that satisfy a viability condition. For instance, trademark viability determiner 108 determines the subset of viable candidate trademarks 118 that are associated with trademark viability scores that satisfy a viability condition. In embodiments, trademark viability determiner 108 determines a trademark viability score for a candidate trademark based on, for example, but not limited to, a Euclidean distance between a vector representative of a candidate trademark and registered names (e.g., registered trademarks, registered entity names, registered drug names, etc.), a cosine distance between a vector representative of a candidate trademark and registered names (e.g., registered trademarks, registered entity names, registered drug names, etc.), a classifier configured to classify a candidate trademark based on registered names (e.g., registered trademarks, registered entity names, registered drug names, etc.), a similarity model configured to determine a level of similarity between a candidate trademark and registered names (e.g., registered trademarks, registered entity names, registered drug names, etc.), and/or the like. In embodiments, candidate trademarks of the set of candidate trademarks 116 associated with a trademark viability score that satisfies a predetermined relationship (e.g., greater than, greater than or equal to, less than, less than or equal to, etc.) with a predetermined trademark viability score threshold are included in the subset of viable candidate trademarks 118 for further consideration. In embodiments, trademark viability determiner 108 provides the subset of viable candidate trademarks 118 to trademark registrability determiner 110 for further consideration.

In step 306, a second subset of candidate trademarks is determined, the second subset of candidate trademarks comprising candidate trademarks of the first subset of candidate trademarks associated with registrability scores that satisfy a registrability condition. For instance, trademark registrability determiner 110 determines the subset of recommended candidate trademarks 120 associated with trademark registrability scores that satisfy the trademark registrability condition. In embodiments, the registrability score is determined for the subset of viable candidate trademarks 118 based on a POCA score. In embodiments, candidate trademarks of the subset of viable candidate trademarks 118 that satisfy a registrability condition are included in the subset of recommended candidate trademarks 120. For instance, candidate trademarks of the subset of viable candidate trademarks 118 associated with a trademark registrability score that satisfies a predetermined relationship (e.g., greater than, greater than or equal to, less than, less than or equal to, highest ranking, etc.) with a predetermined trademark registrability score threshold are included in the subset of recommended candidate trademarks 120. In embodiments, trademark registrability determiner 110 provides the subset of recommended candidate trademarks 120 to trademark output 112.

In step 308, the second subset of candidate trademarks is output along with the registrability scores associated with the second subset of candidate trademarks. For instance, trademark output 112 outputs recommendation 122 of recommended candidate trademarks of the subset of recommended candidate trademarks 120 along with their registrability scores.

Embodiments described herein may operate in various ways to recursively generate trademark recommendations. FIG. 4 depicts a flowchart 400 of a process for recursively generating trademark recommendations, in accordance with an embodiment. Computing device 102, trademark recommender 104, trademark transformer 106, trademark viability determiner 108, trademark registrability determiner 110, trademark output 112, and/or UI manager 208 may operate in accordance with flowchart 400. Note that not all steps of flowchart 400 may need to be performed in all embodiments, and in some embodiments, the steps of flowchart 400 may be performed in different orders than shown. Flowchart 400 is described as follows with respect to FIGS. 1-2 for illustrative purposes.

Flowchart 400 starts at step 402. In step 402, a second transformation is applied to the second subset of candidate trademarks to generate a second set of candidate trademarks. For instance, trademark registrability determiner 110 provides one or more recommended candidate trademarks 212 to trademark transformer 106 to enable trademark transformer 106 to recursively apply additional transformations to the recommended candidate trademark(s) 212 to obtain a second set of candidate trademarks 116. In embodiments, recommended candidate trademark(s) 212 may be the same as, may be a subset of, and/or may be a superset of, the subset of recommended candidate trademarks 120. In embodiments, trademark transformer 106 provides the second set of candidate trademarks 116 to trademark viability determiner 108.

In step 404, a third subset of the candidate trademarks is determined, the third subset of candidate trademarks comprising candidate trademarks of the second set of candidate trademarks associated with viability scores that satisfy the viability condition. For instance, trademark viability determiner 108 determines a second subset of viable candidate trademarks 118 that satisfy the viability condition. In embodiments, trademark viability determiner 108 provides the second subset of viable candidate trademarks 118 to trademark registrability determiner 110.

In step 406, a fourth subset of candidate trademarks is determined, the fourth subset of candidate trademarks comprising candidate trademarks of the third subset of candidate trademarks associated with registrability scores that satisfy the registrability condition. In embodiments, trademark registrability determiner 110 determines a second subset of recommended candidate trademarks 120 that satisfy the registrability condition. In embodiments, trademark registrability determiner 110 provides the second subset of recommended candidate trademarks 120 to trademark output 112.

In step 408, the fourth subset of candidate trademarks is output along with the registrability scores associated with the fourth subset of candidate trademarks. For instance, trademark output 112 outputs recommendation 122 of recommended candidate trademarks of the second subset of recommended candidate trademarks 120 along with their registrability scores.

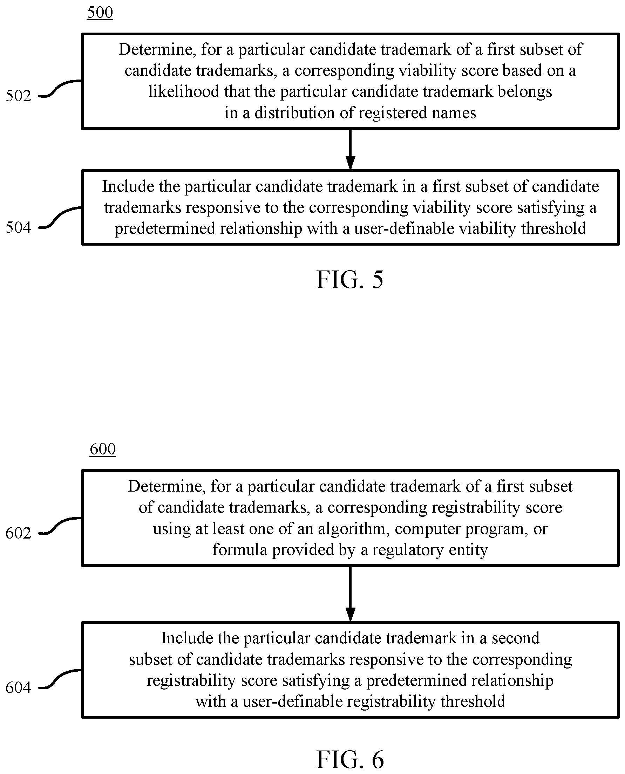

Embodiments described herein may operate in various ways to filter candidate trademarks based on a viability score. FIG. 5 depicts a flowchart 500 of a process for filtering candidate trademarks based on a viability score, in accordance with an embodiment. Computing device 102, trademark recommender 104, and/or trademark viability determiner 108 may operate in accordance with flowchart 500. Note that not all steps of flowchart may operate in accordance with flowchart 500. Note that not all steps of flowchart 500 may need to be performed in all embodiments, and in some embodiments, the steps of flowchart 500 may be performed in different orders than shown. Flowchart 500 is described as follows with respect to FIGS. 1-2 for illustrative purposes.

Flowchart 500 starts at step 502. In step 502, a corresponding viability score is determined for a particular candidate trademark of a first subset of candidate trademarks based on a likelihood that the particular candidate trademark belongs in a distribution of registered names. For instance, trademark viability determiner 108 determines, for a particular candidate trademark of the first set of candidate trademarks 116, a corresponding trademark viability score based on a likelihood that the particular candidate trademark belongs in a distribution of registered names.

In step 504, the particular candidate trademark is included in the first subset of candidate trademarks responsive to the corresponding viability score satisfying a predetermined relationship with a user-definable viability threshold. For instance, trademark viability determiner 108 includes the particular candidate trademark of the first set of candidate trademarks 116 in the subset of viable candidate trademarks 118 based on the corresponding trademark viability score satisfying the trademark viability condition. In embodiments, trademark viability determiner 108 includes, in the subset of viable candidate trademarks 118, candidate trademark(s) 214 of the set of candidate trademarks 116 associated with trademark viability score 216 that satisfies a predetermined relationship (e.g., greater than, greater than or equal to, less than, less than or equal to, etc.) with a predetermined trademark viability score threshold.

Embodiments described herein may operate in various ways to recommend candidate trademarks based on a dissimilarity with existing trademarks. FIG. 6 depicts a flowchart 600 of a process for recommending candidate trademarks based on a dissimilarity with existing trademarks, in accordance with an embodiment. Computing device 102, trademark recommender 104, trademark transformer 106, trademark viability determiner 108, trademark registrability determiner 110, trademark output 112, and/or UI manager 208 may operate in accordance with flowchart 600. Flowchart 600 is described as follows with respect to FIGS. 1-2 for illustrative purposes.

Flowchart 600 starts at step 602. In step 602, a corresponding registrability score is determined for a particular candidate trademark of the first subset of candidate trademarks, the corresponding registrability score determined using at least one of an algorithm, computer program, or formula provided by a regulatory entity. For instance, trademark registrability determiner 110 determines, for a particular candidate trademark of the subset of viable candidate trademarks 118, a trademark registrability score using at least one of an algorithm, computer program, or formula provided by a regulatory entity.

In step 604, the particular candidate trademark is included in a second subset of candidate trademarks responsive to the corresponding registrability score satisfying a predetermined relationship with a user-definable registrability threshold. For instance, trademark registrability determiner 110 includes in the subset of recommended candidate trademarks, candidate trademarks of the subset of viable candidate trademarks 118 that satisfy a registrability condition are included in the subset of recommended candidate trademarks 120. For instance, candidate trademarks of the subset of viable candidate trademarks 118 associated with a trademark registrability score that satisfies a predetermined relationship (e.g., greater than, greater than or equal to, less than, less than or equal to, highest ranking, etc.) with a predetermined threshold trademark registrability score are included in the subset of recommended candidate trademarks 120.

### III. Example Mobile Device and Computer System Implementation

The systems and methods described above in reference to FIGS. 1-6, including computing device 102, trademark recommender 104, trademark transformer 106, trademark viability determiner 108, trademark registrability determiner 110, trademark output 112, client 202, network 204, UI 206, and/or UI manager 208, and/or each of the components described therein, and/or the steps of flowcharts 300, 400, 500, and 600 may be implemented in hardware, or hardware combined with one or both of software and/or firmware. For example, computing device 102, trademark recommender 104, trademark transformer 106, trademark viability determiner 108, trademark registrability determiner 110, trademark output 112, client 202, UI 206, and/or UI manager 208, and/or each of the components described therein, and/or the steps of flowcharts 300, 400, 500, and/or 600 may be each implemented as computer program code/instructions configured to be executed in one or more processors and stored in a computer readable storage medium. Alternatively, computing device 102, trademark recommender 104, trademark transformer 106, trademark viability determiner 108, trademark registrability determiner 110, trademark output 112, client 202, network 204, UI 206, and/or UI manager 208, and/or each of the components described therein, and/or the steps of flowcharts 300, 400, 500, and/or 600 may be each implemented in one or more SoCs (system on chip). An SoC may include an integrated circuit chip that includes one or more of a processor (e.g., a central processing unit (CPU), microcontroller, microprocessor, digital signal processor (DSP), etc.), memory, one or more communication interfaces, and/or further circuits, and may optionally execute received program code and/or include embedded firmware to perform functions.

Embodiments disclosed herein may be implemented in one or more computing devices that may be mobile (a mobile device) and/or stationary (a stationary device) and may include any combination of the features of such mobile and stationary computing devices. Examples of computing devices in which embodiments may be implemented are described as follows with respect to FIG. 7. FIG. 7 shows a block diagram of an exemplary computing environment 700 that includes a computing device 702. Computing device 702 is an example of computing device 102, and/or client 202, which may each include one or more of the components of computing device 702. In some embodiments, computing device 702 is communicatively coupled with devices (not shown in FIG. 7) external to computing environment 700 via network 704. Network 704 comprises one or more networks such as local area networks (LANs), wide area networks (WANs), enterprise networks, the Internet, etc., and may include one or more wired and/or wireless portions. Network 704 may additionally or alternatively include a cellular network for cellular communications. Computing device 702 is described in detail as follows.

Computing device 702 can be any of a variety of types of computing devices. For example, computing device 702 may be a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. Computing device 702 may alternatively be a stationary computing device such as a desktop computer, a personal computer (PC), a stationary server device, a minicomputer, a mainframe, a supercomputer, etc.

As shown in FIG. 7, computing device 702 includes a variety of hardware and software components, including a processor 710, a storage 720, one or more input devices 750, one or more output devices 750, one or more wireless modems f0, one or more wired interfaces 760, a power supply 762, a location information (LI) receiver 764, and an accelerometer 766. Storage 720 includes memory 756, which includes non-removable memory 722 and removable memory 724, and a storage device 790. Storage 720 also stores an operating system 712, application programs 714, and application data 716. Wireless modem(s) 760 include a Wi-Fi modem 762, a Bluetooth modem 764, and a cellular modem 766. Output device(s) 750 includes a speaker 752 and a display 754. Input device(s) 750 includes a touch screen 752, a microphone 754, a camera 756, a physical keyboard 758, and a trackball 740. Not all components of computing device 702 shown in FIG. 7 are present in all embodiments, additional components not shown may be present, and any combination of the components may be present in a particular embodiment. These components of computing device 702 are described as follows.

A single processor 710 (e.g., central processing unit (CPU), microcontroller, a microprocessor, signal processor, ASIC (application specific integrated circuit), and/or other physical hardware processor circuit) or multiple processors 710 may be present in computing device 702 for performing such tasks as program execution, signal coding, data processing, input/output processing, power control, and/or other functions. Processor 710 may be a single-core or multi-core processor, and each processor core may be single-threaded or multithreaded (to provide multiple threads of execution concurrently). Processor 710 is configured to execute program code stored in a computer readable medium, such as program code of operating system 712 and application programs 714 stored in storage 720. The program code is structured to cause processor 710 to perform operations, including the processes/methods disclosed herein. Operating system 712 controls the allocation and usage of the components of computing device 702 and provides support for one or more application programs 714 (also referred to as "applications" or "apps"). Application programs 714 may include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. Processor(s) 710 may include one or more general processors (e.g., CPUs) configured with or coupled to one or more hardware accelerators, such as one or more NPUs and/or one or more GPUs.

Any component in computing device 702 can communicate with any other component according to function, although not all connections are shown for ease of illustration. For instance, as shown in FIG. 7, bus 706 is a multiple signal line communication medium (e.g., conductive traces in silicon, metal traces along a motherboard, wires, etc.) that may be present to communicatively couple processor 710 to various other components of computing device 702, although in other embodiments, an alternative bus, further buses, and/or one or more individual signal lines may be present to communicatively couple components. Bus 706 represents one or more of any of several types of bus structures, including a memory bus or memory controller, a peripheral bus, an accelerated graphics port, and a processor or local bus using any of a variety of bus architectures.

Storage 720 is physical storage that includes one or both of memory 756 and storage device 790, which store operating system 712, application programs 714, and application data 716 according to any distribution. Non-removable memory 722 includes one or more of RAM (random access memory), ROM (read only memory), flash memory, a solid-state drive (SSD), a hard disk drive (e.g., a disk drive for reading from and writing to a hard disk), and/or other physical memory device type. Non-removable memory 722 may include main memory and may be separate from or fabricated in a same integrated circuit as processor 710. As shown in FIG. 7, non-removable memory 722 stores firmware 718, which may be present to provide low-level control of hardware. Examples of firmware 718 include BIOS (Basic Input/Output System, such as on personal computers) and boot firmware (e.g., on smart phones). Removable memory 724 may be inserted into a receptacle of or otherwise coupled to computing device 702 and can be removed by a user from computing device 702. Removable memory 724 can include any suitable removable memory device type, including an SD (Secure Digital) card, a Subscriber Identity Module (SIM) card, which is well known in GSM (Global System for Mobile Communications) communication systems, and/or other removable physical memory device type. One or more of storage device 790 may be present that are internal and/or external to a housing of computing device 702 and may or may not be removable. Examples of storage device 790 include a hard disk drive, a SSD, a thumb drive (e.g., a USB (Universal Serial Bus) flash drive), or other physical storage device.

One or more programs may be stored in storage 720. Such programs include operating system 712, one or more application programs 714, and other program modules and program data. Examples of such application programs may include, for example, computer program logic (e.g., computer program code/instructions) for implementing trademark recommender 104, trademark transformer 106, trademark viability determiner 108, trademark registrability determiner 110, trademark output 112, UI 206, and/or UI manager 208, and/or each of the components described therein, as well as any of flowcharts 300, 400, 500, and/or 600, and/or any individual steps thereof.

Storage 720 also stores data used and/or generated by operating system 712 and application programs 714 as application data 716. Examples of application data 716 include web pages, text, images, tables, sound files, video data, and other data, which may also be sent to and/or received from one or more network servers or other devices via one or more wired or wireless networks. Storage 720 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

A user may enter commands and information into computing device 702 through one or more input devices 750 and may receive information from computing device 702 through one or more output devices 750. Input device(s) 750 may include one or more of touch screen 752, microphone 754, camera 756, physical keyboard 758 and/or trackball 740 and output device(s) 750 may include one or more of speaker 752 and display 754. Each of input device(s) 750 and output device(s) 750 may be integral to computing device 702 (e.g., built into a housing of computing device 702) or external to computing device 702 (e.g., communicatively coupled wired or wirelessly to computing device 702 via wired interface(s) 760 and/or wireless modem(s) 760). Further input devices 750 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 754 may display information, as well as operating as touch screen 752 by receiving user commands and/or other information (e.g., by touch, finger gestures, virtual keyboard, etc.) as a user interface. Any number of each type of input device(s) 750 and output device(s) 750 may be present, including multiple microphones 754, multiple cameras 756, multiple speakers 752, and/or multiple displays 754.

One or more wireless modems 760 can be coupled to antenna(s) (not shown) of computing device 702 and can support two-way communications between processor 710 and devices external to computing device 702 through network 704, as would be understood to persons skilled in the relevant art(s). Wireless modem 760 is shown generically and can include a cellular modem 766 for communicating with one or more cellular networks, such as a GSM network for data and voice communications within a single cellular network, between cellular networks, or between the mobile device and a public switched telephone network (PSTN). Wireless modem 760 may also or alternatively include other radio-based modem types, such as a Bluetooth modem 764 (also referred to as a "Bluetooth device") and/or Wi-Fi modem 762 (also referred to as an "wireless adaptor"). Wi-Fi modem 762 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 764 is configured to communicate with another Bluetooth-capable device according to the Bluetooth short-range wireless technology standard(s) such as IEEE 802.15.1 and/or managed by the Bluetooth Special Interest Group (SIG).

Computing device 702 can further include power supply 762, LI receiver 764, accelerometer 766, and/or one or more wired interfaces 760. Example wired interfaces 760 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 760 of computing device 702 provide for wired connections between computing device 702 and network 704, or between computing device 702 and one or more devices/peripherals when such devices/peripherals are external to computing device 702 (e.g., a pointing device, display 754, speaker 752, camera 756, physical keyboard 758, etc.). Power supply 762 is configured to supply power to each of the components of computing device 702 and may receive power from a battery internal to computing device 702, and/or from a power cord plugged into a power port of computing device 702 (e.g., a USB port, an A/C power port). LI receiver 764 may be used for location determination of computing device 702 and may include a satellite navigation receiver such as a Global Positioning System (GPS) receiver or may include other type of location determiner configured to determine location of computing device 702 based on received information (e.g., using cell tower triangulation, etc.). Accelerometer 766 may be present to determine an orientation of computing device 702.

Note that the illustrated components of computing device 702 are not required or all-inclusive, and fewer or greater numbers of components may be present as would be recognized by one skilled in the art. For example, computing device 702 may also include one or more of a gyroscope, barometer, proximity sensor, ambient light sensor, digital compass, etc. Processor 710 and memory 756 may be co-located in a same semiconductor device package, such as being included together in an integrated circuit chip, FPGA, or system-on-chip (SOC), optionally along with further components of computing device 702.

In embodiments, computing device 702 is configured to implement any of the above-described features of flowcharts herein. Computer program logic for performing any of the operations, steps, and/or functions described herein may be stored in storage 720 and executed by processor 710.

In some embodiments, server infrastructure 770 may be present in computing environment 700 and may be communicatively coupled with computing device 702 via network 704. Server infrastructure 770, when present, may be a network-accessible server set (e.g., a cloud-based environment or platform). As shown in FIG. 7, server infrastructure 770 includes clusters 772. Each of clusters 772 may comprise a group of one or more compute nodes and/or a group of one or more storage nodes. For example, as shown in FIG. 7, cluster 772 includes nodes 774. Each of nodes 774 are accessible via network 704 (e.g., in a "cloud-based" embodiment) to build, deploy, and manage applications and services. Any of nodes 774 may be a storage node that comprises a plurality of physical storage disks, SSDs, and/or other physical storage devices that are accessible via network 704 and are configured to store data associated with the applications and services managed by nodes 774. For example, as shown in FIG. 7, nodes 774 may store application data 778.

Each of nodes 774 may, as a compute node, comprise one or more server computers, server systems, and/or computing devices. For instance, a node 774 may include one or more of the components of computing device 702 disclosed herein. Each of nodes 774 may be configured to execute one or more software applications (or "applications") and/or services and/or manage hardware resources (e.g., processors, memory, etc.), which may be utilized by users (e.g., customers) of the network-accessible server set. For example, as shown in FIG. 7, nodes 774 may operate application programs 776. In an implementation, a node of nodes 774 may operate or comprise one or more virtual machines, with each virtual machine emulating a system architecture (e.g., an operating system), in an isolated manner, upon which applications such as application programs 776 may be executed.

In an embodiment, one or more of clusters 772 may be co-located (e.g., housed in one or more nearby buildings with associated components such as backup power supplies, redundant data communications, environmental controls, etc.) to form a datacenter, or may be arranged in other manners. Accordingly, in an embodiment, one or more of clusters 772 may be a datacenter in a distributed collection of datacenters. In embodiments, exemplary computing environment 700 comprises part of a cloud-based platform.

In an embodiment, computing device 702 may access application programs 776 for execution in any manner, such as by a client application and/or a browser at computing device 702.

For purposes of network (e.g., cloud) backup and data security, computing device 702 may additionally and/or alternatively synchronize copies of application programs 714 and/or application data 716 to be stored at network-based server infrastructure 770 as application programs 776 and/or application data 778. For instance, operating system 712 and/or application programs 714 may include a file hosting service client configured to synchronize applications and/or data stored in storage 720 at network-based server infrastructure 770.

In some embodiments, on-premises servers 792 may be present in computing environment 700 and may be communicatively coupled with computing device 702 via network 704. On-premises servers 792, when present, are hosted within an organization's infrastructure and, in many cases, physically onsite of a facility of that organization. On-premises servers 792 are controlled, administered, and maintained by IT (Information Technology) personnel of the organization or an IT partner to the organization. Application data 798 may be shared by on-premises servers 792 between computing devices of the organization, including computing device 702 (when part of an organization) through a local network of the organization, and/or through further networks accessible to the organization (including the Internet). Furthermore, on-premises servers 792 may serve applications such as application programs 796 to the computing devices of the organization, including computing device 702. Accordingly, on-premises servers 792 may include storage 794 (which includes one or more physical storage devices such as storage disks and/or SSDs) for storage of application programs 796 and application data 798 and may include one or more processors for execution of application programs 796. Still further, computing device 702 may be configured to synchronize copies of application programs 714 and/or application data 716 for backup storage at on-premises servers 792 as application programs 796 and/or application data 798.

Embodiments described herein may be implemented in one or more of computing device 702, network-based server infrastructure 770, and on-premises servers 792. For example, in some embodiments, computing device 702 may be used to implement systems, clients, or devices, or components/subcomponents thereof, disclosed elsewhere herein. In other embodiments, a combination of computing device 702, network-based server infrastructure 770, and/or on-premises servers 792 may be used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 720. Such computer-readable media and/or storage media are distinguished from and non-overlapping with communication media and propagating signals (do not include communication media and propagating signals). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 714) may be stored in storage 720. Such computer programs may also be received via wired interface(s) 760 and/or wireless modem(s) 760 over network 704. Such computer programs, when executed or loaded by an application, enable computing device 702 to implement features of embodiments discussed herein. Accordingly, such computer programs represent controllers of the computing device 702.

Embodiments are also directed to computer program products comprising computer code or instructions stored on any computer-readable medium or computer-readable storage medium. Such computer program products include the physical storage of storage 720 as well as further physical storage types.

### IV. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. A system (100, 200, 700) comprising:
a processor (710); and
a memory device (720, 794) that stores computer code (714, 776, 796) structured to cause the processor to:
apply (302) a first transformation to an input trademark (114) to generate a first set of candidate trademarks (116);
determine (304) a first subset of the candidate trademarks (118) comprising candidate trademarks of the first set of candidate trademarks associated with viability scores that satisfy a viability condition;
determine (304) a second subset of candidate trademarks (120) comprising candidate trademarks of the first subset of candidate trademarks associated with registrability scores that satisfy a registrability condition; and
output (306) the second subset of candidate trademarks (120) and the registrability scores associated with the second subset of candidate trademarks.

2. The system of claim 1, wherein the computer code is further structured to cause the processor to:
apply a second transformation to the second subset of candidate trademarks to generate a second set of candidate trademarks;
determine a third subset of the candidate trademarks comprising candidate trademarks of the second set of candidate trademarks associated with viability scores that satisfy the viability condition;
determine a fourth subset of candidate trademarks comprising candidate trademarks of the third subset of candidate trademarks associated with registrability scores that satisfy the registrability condition; and
output the fourth subset of candidate trademarks and the registrability scores associated with the fourth subset of candidate trademarks.

3. The system of claim 1, wherein, to apply the first transformation to the input trademark, the program code is structured to cause the processor to perform at least one of:
replace one or more characters of the input trademark with one or more other characters;
add one or more characters to the input trademark; or
remove one or more characters from the input trademark.

4. The system of claim 1, wherein, to determine the first subset of the candidate trademarks, the program code is structured to cause the processor to:
determine, for a particular candidate trademark of the first subset of candidate trademarks, a corresponding viability score based on a likelihood that the particular candidate trademark belongs in a distribution of registered names; and
include the particular candidate trademark in the first subset of candidate trademarks responsive to the corresponding viability score satisfying a predetermined relationship with a user-definable viability threshold.

5. The system of claim 1, wherein, to determine the second subset of the candidate trademarks, the program code is structured to cause the processor to:
determine, for a particular candidate trademark of the first subset of candidate trademarks, a corresponding registrability score indicative of a dissimilarity between the particular candidate trademark and a set of registered trademarks; and
include the particular candidate trademark in the second subset of candidate trademarks responsive to the corresponding registrability score satisfying a predetermined relationship with a user-definable registrability threshold.

6. A method (300) comprising:
applying (302) a first transformation to an input trademark (114) to generate a first set of candidate trademarks (116);
determining (304) a first subset of the candidate trademarks (118) comprising candidate trademarks of the first set of candidate trademarks associated with viability scores that satisfy a viability condition;
determining (304) a second subset of candidate trademarks (120) comprising candidate trademarks of the first subset of candidate trademarks associated with registrability scores that satisfy a registrability condition; and
outputting (306) the second subset of candidate trademarks (120) and the registrability scores associated with the second subset of candidate trademarks.

7. The method of claim 6, further comprising:
applying a second transformation to the second subset of candidate trademarks to generate a second set of candidate trademarks;
determining a third subset of the candidate trademarks comprising candidate trademarks of the second set of candidate trademarks associated with viability scores that satisfy the viability condition;
determining a fourth subset of candidate trademarks comprising candidate trademarks of the third subset of candidate trademarks associated with registrability scores that satisfy the registrability condition; and
outputting the fourth subset of candidate trademarks and the registrability scores associated with the fourth subset of candidate trademarks.

8. The method of claim 6, wherein said applying a first transformation to the input trademark comprises at least one of:
replace one or more characters of the input trademark with one or more other characters;
add one or more characters to the input trademark; or
remove one or more characters from the input trademark.

9. The method of claim 6, wherein said determining a first subset of the candidate trademarks comprises:
determining, for a particular candidate trademark of the first subset of candidate trademarks, a corresponding viability score based on a likelihood that the particular candidate trademark belongs in a distribution of registered names; and
including the particular candidate trademark in the first subset of candidate trademarks responsive to the corresponding viability score satisfying a predetermined relationship with a user-definable viability threshold.

10. The method of claim 6, wherein said determining a second subset of the candidate trademarks comprises:
determining, for a particular candidate trademark of the first subset of candidate trademarks, a corresponding registrability score indicative of a dissimilarity between the particular candidate trademark and a set of registered trademarks; and
including the particular candidate trademark in the second subset of candidate trademarks responsive to the corresponding registrability score satisfying a predetermined relationship with a user-definable registrability threshold.

11. A computer-readable storage medium (720, 794) comprising executable instructions (714, 776, 796) that, when executed by a processor (710), cause the processor (710) to:
apply (302) a first transformation to an input trademark (114) to generate a first set of candidate trademarks (116);
determine (304) a first subset of the candidate trademarks (118) comprising candidate trademarks of the first set of candidate trademarks associated with viability scores that satisfy a viability condition;
determine (304) a second subset of candidate trademarks (120) comprising candidate trademarks of the first subset of candidate trademarks associated with registrability scores that satisfy a registrability condition; and
output (306) the second subset of candidate trademarks (120) and the registrability scores associated with the second subset of candidate trademarks.

12. The computer-readable storage medium of claim 11, wherein, the executable instructions, when executed by the processor, further cause the processor to:
apply a second transformation to the second subset of candidate trademarks to generate a second set of candidate trademarks;
determine a third subset of the candidate trademarks comprising candidate trademarks of the second set of candidate trademarks associated with viability scores that satisfy the viability condition;
determine a fourth subset of candidate trademarks comprising candidate trademarks of the third subset of candidate trademarks associated with registrability scores that satisfy the registrability condition; and
output the fourth subset of candidate trademarks and the registrability scores associated with the fourth subset of candidate trademarks.

13. The computer-readable storage medium of claim 11, wherein, to apply the first transformation to the input trademark, the executable instructions, when executed by the processor, cause the processor to perform at least one of:
replace one or more characters of the input trademark with one or more other characters;
add one or more characters to the input trademark; or
remove one or more characters from the input trademark.

14. The computer-readable storage medium of claim 11, wherein, to determine the first subset of the candidate trademarks, the executable instructions, when executed by the processor, cause the processor to:
determine, for a particular candidate trademark of the first subset of candidate trademarks, a corresponding viability score based on a likelihood that the particular candidate trademark belongs in a distribution of registered names; and
include the particular candidate trademark in the first subset of candidate trademarks responsive to the corresponding viability score satisfying a predetermined relationship with a user-definable viability threshold.

15. The computer-readable storage medium of claim 11, wherein, to determine the second subset of the candidate trademarks, the executable instructions, when executed by the processor, cause the processor to:
determine, for a particular candidate trademark of the first subset of candidate trademarks, a corresponding registrability score indicative of a dissimilarity between the particular candidate trademark and a set of registered trademarks; and
include the particular candidate trademark in the second subset of candidate trademarks responsive to the corresponding registrability score satisfying a predetermined relationship with a user-definable registrability threshold.
